# EUROPEAN PATENT SPECIFICATION

(11) **EP 2 441 870 B1**
(45) Date of publication and mention of the grant of the patent: **26.07.2017**
(21) Application number: 10785651.0
(22) Date of filing: 07.06.2010
(51) Int. Cl.: D06F 17/06

(54) **IMPELLER TYPE ROLL MODE WASHING METHOD AND WASHING MACHINE ADOPTING THE METHOD**
LAUFRAD-ROLLMODUS-WASCHVERFAHREN UND WASCHMASCHINE MIT DEM VERFAHREN
PROCÉDÉ DE LAVAGE EN MODE DE ROULEMENT DE TYPE À HÉLICE ET MACHINE À LAVER ADOPTANT LE PROCÉDÉ

(30) Priority: 08.02.2010 CN 201010106710; 08.06.2009 CN 200910147170
(43) Date of publication of application: 18.04.2012
(73) Proprietor: Hefei Goolu Tech. Washer Co., Ltd, Shushan District Hefei Anhui 230031 (CN)
(72) Inventor: PAN, Xuezhen, Shanghai 200032 (CN)
(74) Representative: Potter Clarkson LLP
(86) International application number: PCT/CN2010/000801
(87) International publication number: WO 2010/142138

(56) References cited:
- CN-A- 1 170 056
- CN-A- 1 721 610
- CN-A- 101 191 285
- CN-A- 101 718 030
- CN-Y- 2 584 635
- CN-Y- 2 873 842
- JP-A- 54 075 175
- US-A- 5 829 277
- US-A- 5 829 277
- US-A- 5 850 750
- US-B1- 6 220 063

## Description

### FIELD OF THE INVENTION

The invention relates to a rolling mode washing method for washing laundries in an upright tub, in particular to a washing method for accomplishing a washing process using pulsators in upright tub to perform the rolling of laundries with at least two roll surfaces.

### BACKGROUND OF THE INVENTION

The conventional washing machines are usually distinguished into a drum washing machine, a pulsator washing machine and a agitator washing machine.

A drum washing machine lifts and drops laundries to realize a process of washing and rinsing by providing the ribs within thereof.

A pulsator washing machine stirs the water flow using pulsators, so that laundries are stirred by the irregularly water flow to finish the process of washing and rinsing.

An agitator washing machine directly or indirectly drags laundries with the water power caused by a stirring pole to finish the washing.

Although the agitator washing machine and the pulsator washing machine have a high cleaning ratio, shorter washing time and are easy to be controlled in high-speed spinning, both of them have shortcomings in bigger wear, larger water consumption and severe laundry twisting.

On the contrary, the drum washing machine is lower in its cleaning ratio, small in wear, lower in water consumption and slight in cloth twisting, but it takes longer washing time and is not easy to be controlled in spin.

Those who are skilled in the art have already studied over the past decades on how to combine the advantages of different kinds of washing machine and overcome the individual shortcoming, they haven't found an effective solution as yet.

An American company MAYTAG proposed a valuable idea as follows:
A washing machine is disclosed in US 6220063B1, which has a gear assembly, said two stirrers rotate in clockwise and counter-clockwise direction, respectively, and form an effect similar to that of lifting and dropping in a drum washing machine, when they are arranged in the mode of the drawings.

It can be known from the above document that a drum washing machine realizes the roll movement of the laundries by pulsators.

However, this solution also has a lot of shortcomings; for example, said pulsator should be very large, it is necessary to provide a tight fit between the pulsator and a inner drum to avoid laundries from being clamped. Besides, for small amount of laundries, it is difficult to form a process of lifting and dropping independent of the distance between the lower ends of the two pulsators are close or far. Furthermore, the laundries will often form a rugby shape in the actual product during the washing, which causes the inner and outer laundries can not be exchanged so that the uniformity of washing is lowered.

The above document is incorporated in present invention as the major background document, and the present invention omitted some descriptions of the techniques of the prior art by directly citing the relevant content disclosed in the above document and will not be described in the present invention.

A top mounted washing machine is disclosed in US 5829277A, which has a spherical-shaped washing basket, side agitators are provided on the washing basket, the two agitators can only be rotated in the same direction, i.e. clockwise or counter-clockwise direction (seen from facing the pulsator) due to the limitation of their driving. In principle, performing rolling effect in an upright tub washing machine similar to that in a drum washing machine is not its objective and solution.

In fact, the shape of the pulsator of the actual products from the MAYTAG Co. as the patentee of the above two patents is similar to that of pulsator disclosed in CN 200520133107X and CN 200510080134.X, which resulting in a very low probability in inner and outer exchange and random exchange of clothe agglomerations, and thus resulting a difference in washing uniformities of laundries.

In addition to the complexity of the pulsator structure and high costs, the biggest shortcoming of the prior art and its actual products is that the laundries can be rolled only in one direction with two slantedly located pulsators, which likes the known drum washing machines, it is impossible to realize a roll in more than one direction. Furthermore, when the amount of laundries is small, a roll can not be performed, and the laundries rolled in one direction are easy to form a rugby shape.

In a pulsator type clothes washer, a rotatable pulsator mounted at the center of the clothes washer is rotated so the flow of water swirls, thus executing a washing operation.

A typical pulsator type clothes washer is comprised of a body, a water basket suspended to the body by the suspension device and a clothes basket mounted rotatably in the water basket 1. The clothes basket comprises a side wall having a plurality of openings, and a bottom portion having a pulsator rotatably mounted on the center of the bottom portion. Further, beneath the water basket a motor and a reduction gear assembly are provided. The motor generates the driving force, and the reduction gear assembly reduces a high speed rotational force of the motor into a proper speed rotational force for both the water basket and the pulsator. The rotation force of the motor is transmitted to the pulsator and/or the water basket by the selective assembly or disassembly of a clutch (not shown) housed in the reduction gear assembly. The pulsator is connected with an input shaft projected from the reduction gear assembly. The clockwise or counterclockwise rotational force of the pulsator transfers to the clothes.

US 5850750 A discloses a clothes washer having a pulsator apparatus comprising a housing; a water basket disposed in the housing for containing water; a clothes basket disposed in the water basket and comprising a bottom portion and a side wall; an operating force transmitting means mounted between the housing and the water basket for transmitting the operating force to the clothes basket; a driving pulsator fixed on a shaft extended perpendicular to the operating force transmitting means and rotatably arranged on the bottom portion in the clothes basket; and a plurality of driven pulsators operated by the driving pulsator.

### SUMMARY OF THE INVENTION

To define accurately the solution of the present invention, the following words will be here self defined, and the definitions of the present invention will be followed throughout no matter whether there is any similar definition in the prior art or not.

It will be understood that the direction for pulsator rotating in clockwise or counter-clockwise only means the rotating direction of the pulsator when the observer is facing the front of the pulsator (the surface adjacent to the inner tub or the washing tub is its back surface).

It will be understood that a roll surface only means the surface on which the laundry flow formed by furling, lifting, casting, dispersing and dropping laundries with two adjacent pulsators slantedly located.

It will be understood that the laundry flow is a continuous-like flowing body of laundries formed by a heap of laundries with different sizes moving substantially in one direction.

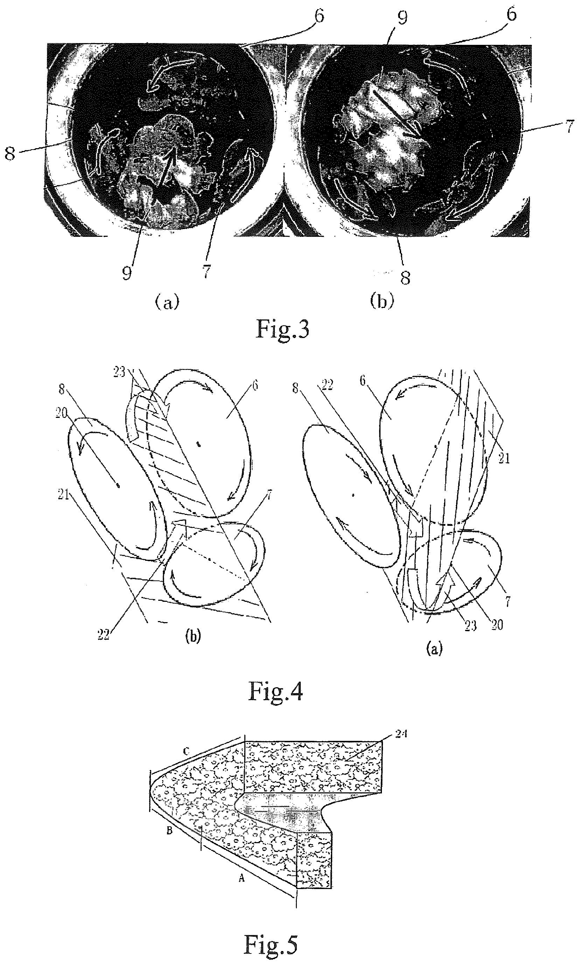

As shown in Figs.4a, 4b and Fig 5, suppose that there is an imaginary plane 21 in the pulsators 6, 8 (or the pulsators 7, 8) and the laundry flow 24 moves in said imaginary plane 21. Of course, the real laundry movement cannot be on a plane of physical or spatial concept. Introducing hereby the imaginary plane 21 is only for better explaining the invention, and the real flow of the laundries can become clear through the description of the present invention and the accompanied drawings.

A main objective of the present invention is to provide a rolling mode washing method using pulsators, in particular, said washing method has at least two rolling surfaces and a lateral auxiliary force.

It is another objective of the present invention to provide a washing machine using said method.

In a pulsator type clothes washer, a rotatable pulsator mounted at the center of the clothes washer is rotated so the flow of water swirls, thus executing a washing operation.

A typical pulsator type clothes washer is comprised of a body, a water basket suspended to the body by the suspension device and a clothes basket mounted rotatably in the water basket 1. The clothes basket comprises a side wall having a plurality of openings, and a bottom portion having a pulsator rotatably mounted on the center of the bottom portion. Further, beneath the water basket a motor and a reduction gear assembly are provided. The motor generates the driving force, and the reduction gear assembly reduces a high speed rotational force of the motor into a proper speed rotational force for both the water basket and the pulsator. The rotation force of the motor is transmitted to the pulsator and/or the water basket by the selective assembly or disassembly of a clutch (not shown) housed in the reduction gear assembly. The pulsator is connected with an input shaft projected from the reduction gear assembly. The clockwise or counterclockwise rotational force of the pulsator transfers to the clothes.

US 5850750 A discloses a clothes washer having a pulsator apparatus comprising a housing; a water basket disposed in the housing for containing water; a clothes basket disposed in the water basket and comprising a bottom portion and a side wall; an operating force transmitting means mounted between the housing and the water basket for transmitting the operating force to the clothes basket; a driving pulsator fixed on a shaft extended perpendicular to the operating force transmitting means and rotatably arranged on the bottom portion in the clothes basket; and a plurality of driven pulsators operated by the driving pulsator.

The objectives of the present invention can be realized by the following modes.

The washing machine according to the present invention includes an outer tub which is hanged on a metal frame of a house of the washing machine by hanger, an inner tub which is rotatably fixed within the outer tub through transmission mechanism, and a pulsator is rotatably fixed within the inner tub.

The rolling mode washing method using pulsators according to the invention includes washing, rinsing and spinning; putting and/or no putting detergent or other detergent additives during washing or rinsing; and supplying water to a specified position, then starting the motor to drive pulsators to rotate; in which lifting ribs on one pair of adjacent pulsators lift the laundries to be washed in a continuous-like laundry flow mode, thus the laundries are casted, dispersed and dropped due to the inertial and gravitational forces and then are lifted again, the above process repeats at least for once; then the lifting ribs on another pair of adjacent pulsators lift the laundries to be washed in a continuous-like laundry flow mode, thus the laundries are casted, dispersed and dropped due to the inertial and gravitational forces and then are lifted again, the above process also repeats at least for once; the imaginary planes of the two laundry flows have an angle of 20-160° therebetween, preferably 80-160°. Further, one of said washing processes is to use the ribs on a pair of adjacent pulsators to lift and furl the laundry flow, and the laundries are casted, dispersed and dropped due to the inertial and gravitational forces, and then relifted. Said process repeats at least for 3-50 times, preferably 5-30times.

Preferably, one of said one pair of pulsators and one of another pair of pulsators according to the present invention is a common one; the rotating directions of the adjacent edges of said one pair of adjacent pulsators are opposite and upward so that the ribs thereon can lift the laundries.

The pulsator according to the present invention is rotatably provided between the center of the inner tub and the side wall of the inner tub, the pulsator includes a base surface and ribs arranged thereon, the maximum thickness of said ribs is 10-90% , preferably 25-45%, of the maximum thickness of the whole pulsators; the base surface is a planar plate type or an arc type, the base surface coincides with the shape of the contacting part of the inner tub. The pulsator according to the present invention is slantedly arranged between the side wall and the center of the inner tub in such a manner that a part of the pulsator near the side wall of the inner tub is arranged higher and another part of the pulsator near the center of the inner tub is arranged lower. The axis of the central driving shaft of the pulsator intersects with the center axis of the inner tub, the acute angle of the two axes is less than 90°, but more than 0°, preferably, the acute angle of the two axes is less than 60°,but more than 10°; more preferably, the acute angle of the two axes is less than 40°, but more than 15°. The rotation speed of the pulsator is 15-65 rpm, preferably 45-55 rpm. Lifting ribs are arranged on the pulsator from near the center to near the edge of the pulsator, the number of the ribs is 1-8, preferably 2-6.

A side driving force to the laundries is provided by at least another pulsator except said one pair of adjacent pulsators according to the invention, which lift laundries and make the laundries become casted, dispersed and dropped due to the inertial and gravitational forces.

The washing method according to the present invention has at least two laundry rolling surfaces alternating and not simultaneously formed to provide mechanical force for washing laundry, said rolling surface is formed by the rotation of pulsators; in which one laundry rolling surface is formed by two adjacent pulsators slantedly arranged, a side auxiliary force is provided by at least another pulsator. The another laundry rolling surface alternating but not simultaneously formed, is realized by another pair of two adjacent pulsators slantedly arranged, a side auxiliary force is also provided by at least another pulsator. Said any one rolling surface is formed by rotations of two adjacent pulsators, while one pulsator of said two pair of pulsators forming the two rolling surfaces can be arranged as a common one or noncommon one , too.

Said any two-in-one pair of pulsators can rotate in clockwise and/or counter-clockwise, to realize the rolling of the laundry for washing, the rotating direction of at least one pair of adjacent pulsators should be set to finish the process of furling, lifting, casting, dispersing and dropping the laundries.

Preferably, a washing mode with two rolling surfaces is adopted, of course, but washing mode with more than two rolling surfaces is also considerable in the present invention. The angle between imaginary planes formed by said two rolling surfaces is 0-120°, preferably 90-120°, and more preferably 120°. In washing, laundries perform more than one rolling on any one of the rolling surfaces, and then switched to another rolling surface to perform more than one rolling, and repeats the process until the washing is finished, the rolling number of laundry on different rolling surfaces may be the same or different.

The number of ribs arranged on pulsators, from the center to the edge, can be 1-6, preferably 2-5, more preferably 3-4; the washing mode can be performed with 3-6 pulsators, preferably 3-4, more preferably 3. The rotation speed of the pulsator for rolling or providing side auxiliary force is 10-90 rpm, preferably 30-70 rpm, more preferably 45-60 rpm. The inclination angle 0 formed by the cross-section of the pulsator and the horizontal plane is 0-80°, preferably 40-65°, more preferably 55-60°.

The rolling mode washing method using pulsators according to the present invention is to perform a process of lifting, furling, casting, dispersing, dropping, relifting, and repeating said above process in another angular position by means of the ribs on pulsators, said method can be used to wash or rinse laundries in similar drum washing machine or even at a lower water level. Washing laundries in more than one rolling direction according to the present invention overcomes the shortcoming that the inner and outer laundries cannot be rolled. A balance ring of inner tub of the pulsator washing machine is used to reduce the difficulty in balance arrangement. Said method has overcome the shortcomings of the drum washing machine and the pulsator washing machine, and combined their advantages, and even has more advantages than those obtained by their simple combinations.

### BRIEF DESCRIPTION OF THE DRAWINGS

The present invention will now be described in details with reference to the following drawings, in which
Figs.1 and 2 are schematic drawing of the washing machine structure of US 622006381 and the drive of pulsator.
Fig.3 shows a picture of the operational process of a real prototype manufactured according to the present invention. In which (a) and (b) are the schematic drawings illustrating the rolling formed in different pair of pulsators.
Fig.4 is a schematic drawing of the embodiment in Fig.3, in which (a) and (b) are schematic drawings showing the rolling formed in different pair of pulsators.
Fig.5 is a schematic drawing showing the process of laundries from furling, lifting, casting, dispersing to dropping.
Fig.6a and 6b are the schematic drawings showing the rotation directions of the driving shaft of the pulsator when the driving gear of the reduction gear system rotates in clockwise and counter-clockwise for the embodiments in Figs.3 and 4.
Fig.7 is an embodiment according to the present invention adopting a reduction gear train with four pulsators.
Fig.8 is anther embodiment according to the invention adopting a reduction gear train with four pulsators.

To make clear the present invention, names and reference numbers are now given to the various parts in drawings, they are:
Gear train 1, pulsator 2, pulsator sleeve 3, pulsator fixing member 4, gear ring 5, pulsators 6,7,8, rolling direction 9, control panel 10, inner tub 11, outer tub 12, house 13, damping suspender 14, motor 15, rotatable connecting member of pulsator 16, pulsator 17, inner ring 18, inlet movable cover 19, pulsator shaft 20, imaginary plane 21, laundry side auxiliary feeding direction 22, laundry rolling schematic 23, laundry flow 24, gears 6', 7' 8' on the driving shafts of the pulsators 6, 7, 8, main driving gear 25, auxiliary gear 26, gear 27 on the driving shaft of the fourth pulsator.

### DETAILED DESCRIPTION OF THE INVENTION

### First Embodiment

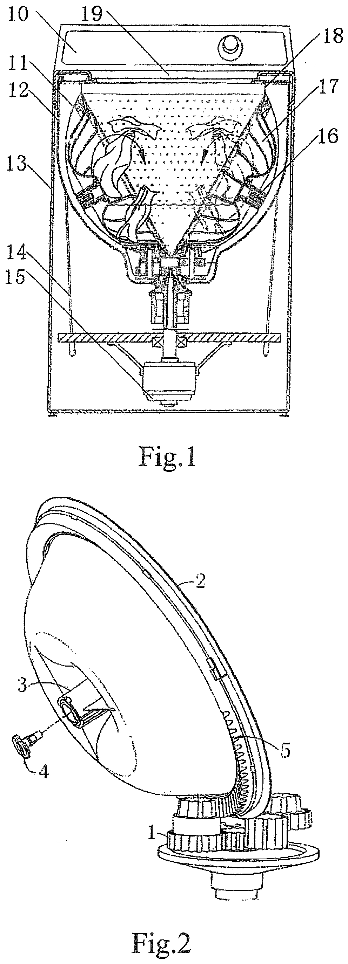

What is described in the embodiment is a washing machine for realizing the objective of the present invention, in which the structure and the operational mode of US 6220063B1 is shown in Fig.1, including a control panel 10; a house 13; a damping suspender 14 for outer tub 12 suspended in the house 13; the inner tub 11 being rotatablely provided within the outer tub 12, wherein the inner tub 11 and the pulsator 17 are driven by the motor 15 and the reduction gear train; during the use, laundries are put into the inner tub 11 through the inlet or the movable cover 19 together with a certain amount of washing fluid (water and detergent).

In US 6220063B1, it is known that two pulsators slantedly located are used, its main shortcoming is that laundries can roll only in one rolling surface. However, the drum washing machine of the prior art have the same shortcoming. Another shortcoming is that, if it is necessary to roll much more laundries, the pulsator should be made larger, according to the above documents and the real washing machine, the pulsator has a diameter nearly the same to the height of the inner tub, and if small amount of laundries are to be washed, the rolling effect is very bad since it is very difficult for the pulsator to clip the washed laundries, and if small pulsator is used, not only the problem in clipping small amount of laundries has not been solved, but also a new problem is occured, i.e. it is difficult to conduct the rolling of a large amount of laundries.

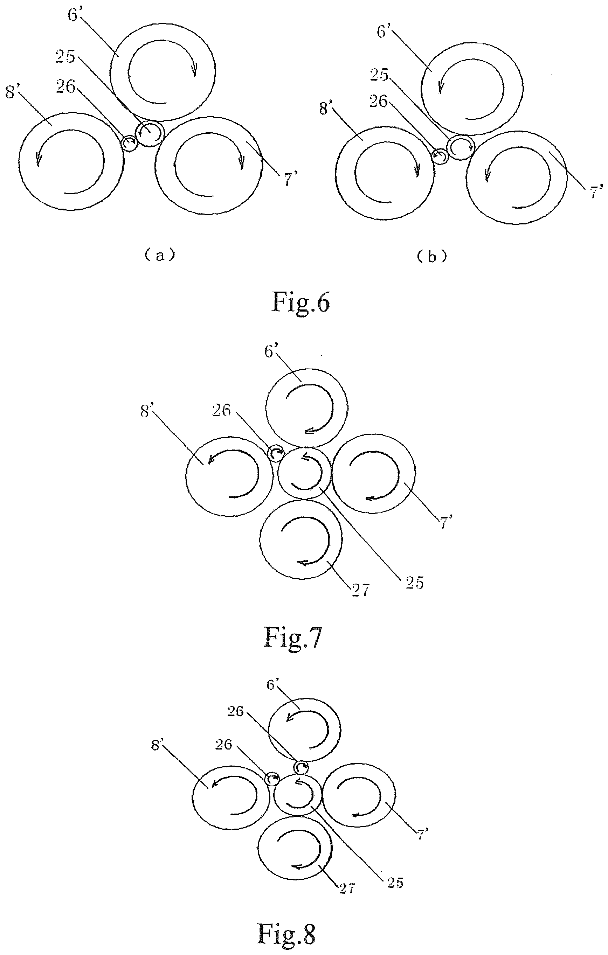

The present embodiment differs from the prior art in that, as shown in Figs.3,4,5, and 6, the motor 15 drives the main driving gear 25, and when the main driving gear 25 rotates in the counter-clockwise direction as shown in Fig.6a, the gears 6',7' rotate in the clockwise direction, so that the pulsators 6,7 rotate in clockwise direction by the pulsator shaft, while the gear 8' drives the pulsator 8 to rotate in counter-clockwise direction in virtue of the auxiliary gear 26 rotating in counter-clockwise direction,.

Since the pulsators 6, 7, 8 are slantedly located, laundries driven by the pulsators 8,6 are furled, lifted, casted, dispersed and dropped, this process can be either a cycle or a plurality of cycles.

Assume that there exists an imaginary plane 21 in the pulsators 6, 8, the laundry flow 24 will move on the imaginary plane 21.

The researchers of the present invention proposed particularly that when a pair of pulsators are driven and make the laundries do the cycle of furling, lifting, casting, dispersing and dropping, an auxiliary force will be added on the side surface outside the pair of pulsators, the effect of said side auxiliary force is to push the dropped laundries toward the clipping position of the pair of pulsators for the laundries, no matter how many the laundries are, the laundries can be rolled effectively, so as to finish better the cycle of laundries furling, lifting, casting, dispersing and dropping, as shown in the rolling direction 9 in Figs.3a, 3b.

Now referring to Fig.4b, the major function of the pulsators 6,8 now is to furl, lift and cast the laundries, while the pulsator 7 rotates in clockwise, The side auxiliary force will be described as follows: i.e. said imaginary plane 21 divides substantially the pulsator 7 into one half near the pulsator 6 and the other half near the pulsator 8, both the half of the pulsator 7 near the pulsator 6 and the half of the pulsator 6 rotate in clockwise, and the dropped laundries in this area are pushed toward the pulsator 6, while the half of the pulsator 7 near the pulsator 8 feed the laundries together with the pulsator 8 to the clipping position of the pulsators 6,8 along the laundry feeding direction 22.

On the contrary, as shown in Fig.4a, the major function of the pulsators7,8 is now to furl, lift and cast the laundries, while the pulsator 6 rotates in counter-clockwise, the laundries, under the cooperation of the pulsator 6 and the pulsator 8, are fed to the clipping position of the pulsators 7,8.

Said clipping is such a process as the ribs on the pulsators approach and furl and lift the laundries while the pulsator rotates.

The number of said ribs arranged on pulsators, from the center to the edge, is one and can be 1-6, preferably 2-5, more preferably 3-4.

As one important feature of the invention, the invention realizes a washing process with at least two rolling surfaces, which has never been disclosed in the prior art and is a very important improvement. Said two rolling surfaces are based on the imaginary plane 21 with an inclination of larger than 0° but less than 120°, preferably 90-120°, and more preferably 120°.

Structurally, the invention is similar to CN 200610149183.9, in which a vertical washing machine is known, which includes an inner tub, an outer tub, pulsators, a motor, a retarder and transmission devices, the pulsators are three or four pulsators pivotally provided on the inner wall of the inner tub in the direction corresponding to 120° or 90°, the pulsator has a basin shape with ribs of smooth edges, and the gear ring is provided on its back; the transmission device is provided with three or four output shafts for installation of pulsators. When the washing method is used in a vertical multi-pulsator washing machine, washing can be performed so long as the water amount reaches 1/3 of the height of the pulsator, all pulsators can rotate in clockwise or counter-clockwise simultaneously to washing laundries. Since a multi-pulsator structure is adopted, the laundries can be reversed and spun spatially to realize an effect of no twisting, higher cleanness and lower wear. As the inner tub and outer tub are designed to be of a basin shape, the outer tub has a smaller bottom size, resulting in a saving of water.

Other documents such as CN 1170056 (Daewu Electronics Co., 1998.01.14), in which a multi-pulsator washing machine is disclosed, including an driving pulsator arranged on the bottom of the tub and driven by a motor, and a plurality of driven pulsators driven by the driving pulsator and rotating around individual axis of the supporting shaft fixed on the side wall of the tub.

The Chinese patent application is an improvement to the conventional washing machine. However, this improvement, with which the washing fluid is stirred by pulsators such that the laundries are washed by the stirring of water, cannot realize the rolling effect similar to that of a drum washing machine. In addition, since a mode of rotating in identical direction is adopted, it is impossible to get a multi-directional rolling effect; especially, laundries will be clipped between the gears at side surfaces of pulsator immediately with the arrangement of pulsators in CN 1170056, and no normal washing process can be realized.

Thus, the prior art is different from the present invention in the objectives and solution as well as technology.

### Embodiment 2

Now as shown in Fig.7, a reduction gear train of four driving shafts is shown, in which each driving shaft connects and drives an pulsator, and altogether four pulsators are driven, in which when one pair of pulsators are used to furl, lift, cast and disperse laundries, one of the same is rotated with the other pulsators in the same direction and provides a side auxiliary force to laundries. In Fig.7, when the main driving gear 25 is rotated in counter-clockwise direction, the pulsator corresponding to the gear 8' is rotated in counter-clockwise and the pulsators corresponding to the gears 6', 7', 27 are rotated in clockwise, thus the pulsators 8,6 perform a cycle of furling, lifting, casting and dispersing laundries, while the pulsators corresponding to the gears 7',27 act as a provider for the side auxiliary force and push and/or feed laundries to the great extent to the furl position of the pulsators 8, 6 to improve the efficiency in lifting.

When the main driving gear 25 is rotated in clockwise, the pulsators corresponding to the gears 8', 27 perform a cycle of furling, lifting, casting and dispersing laundries, while the pulsators corresponding to the gears 6',7' act as the provider for side auxiliary force, push and/or feed laundries to the great extent to the furl position of the pulsators 8', 27 to improve the efficiency in lifting.

According to the above descriptions, the washing mode of the invention can be realized by means of 3-6 pulsators, preferably 3-4 pulsators, and more preferably 3 pulsators. One of the pulsators, whether it is rotated in clockwise direction or in counter-clockwise direction, should be fitted with another pulsator rotated in opposed direction to form a cycle of furling, lifting, casting and dispersing laundries (with the rotating direction totally determined by the fished movements), the rest pulsators will provide side auxiliary forces to the pair of pulsators.

The furling efficiency, the lifted height as well as the casting distance of laundries are determined by the diameter of pulsators, the height of the ribs on pulsators and the rotation speed of pulsators. In general, the larger diameter of the pulsators and the higher rotation speed of the ribs is helpful to improve the efficiency of the furling laundries, increase the lifted height as well as the casting distance of laundries. However, a higher speed will cause the wear between the pulsators and laundries. The pulsators according to the invention have a rotation speed of 10-90rpm, preferably 30-70 rpm, and more preferably 45-60 rpm.

The cross-section of pulsators, i.e. the cross-section of the pulsator in perpendicular to the rotation shaft of the pulsators, has an inclination angle of 10-80° with the horizontal plane, preferably 40-65°, and more preferably 55-60°.

### Embodiment 3

The embodiment is an improvement to the solution of the US 6220063B1. The two slantedly located pulsators are disclosed in the above document, which has a big shortcoming in that laundries can roll only on one rolling surface, and the conventional drum washing machine also has the same shortcoming. Another shortcoming is that, if a larger amount of laundries are needed to be rolled, the pulsator should be made larger, and then the diameter of pulsators will be nearly equal to the height of the inner tub according to the above document and the real washing machines. Consequently, if a small amount of laundries are to be washed, as the pulsators are hard to clip the washed laundries, the effect in washing will be very bad, and if smaller pulsators are then used, not only the problem of clipping small amount of laundries has not been solved, but also a new problem is occured, i.e. it is very difficult to perform the rolling of a large amount of laundries.

With the present invention and taking advantage of the solution of Fig.8, it is possible to overcome the shortcomings in the above documents.

As shown in Fg.8, four pulsator driving gears 6',7',8',27 are used to drive the corresponding pulsators, respectively, whose arrangement modes and technical parameters are identical to the above mentioned solutions. When the main driving shaft 25 is rotated in counter-clockwise, the pulsators corresponding to the gears 6', 8' are rotated in counter-clockwise, while the pulsators corresponding to the gears 7', 27 are rotated in clockwise, and then the pulsators corresponding to the gears 8', 27 act as the major feeding pulsators, the pulsators corresponding to the gears 6', 7' act as the major clipping pulsators to finish the cycle of furling, lifting, casting and dispersing laundries. When the main driving shaft 25 is rotated in clockwise, the pulsators corresponding to the gears 6', 8' are rotated in clockwise, and the pulsators corresponding to the gears 7', 27 are rotated in counter-clockwise, then the pulsators corresponding to the gears 6', 7' act as the major feeding pulsators, the pulsators corresponding to the gears 8', 27 act as the major clipping pulsators to finish the cycle of furling, lifting, casting and dispersing laundries.

### Embodiment 4

The washing mode according to the present embodiment has at least two laundry rolling surfaces, said rolling surfaces are formed by pulsators, in which one of the rolling surfaces is formed by two adjacent pulsators slantedly located to realize the process of furling, lifting, casting, dispersing and dropping laundries, as shown in Fig.5, while the other laundry rolling surface is formed by another pair of two adjacent pulsators slantedly located to realize the process of furling, lifting, casting, dispersing and dropping laundries; and an inclination angle between the two rolling surfaces is more than 0°.

Of course, it is also considerable that more than two rolling surfaces are formed, preferably 2-8 rolling surfaces, more preferably 2-4 rolling surfaces, and the most preferably 2 rolling surfaces.

Any one rolling surface is formed by the rotation of two pulsators.

A plurality of rolling surfaces are formed by different two-in-one pairs of pulsators, among them one pulsator can be used as the common shared one, or not common shared one, too.

Any one pair of pulsators can be rotated in clockwise and/or counter-clockwise, among them the rotation direction of at least one pair of pulsators should ensure to realize a process of furling, lifting, casting, dispersing and dropping laundries.

An imaginary plane 21 is formed by the rolling surfaces in rolling direction, the angle formed between the two imaginary planes of said two rolling surfaces is 20-160°, preferably 80-140°, and more preferably 120°.

More than one continuous rollings are performed on any one rolling surface, and are then switched to be performed on another rolling surface, this cycle is repeated till the end of the washing.

The number of rollings on different rolling surfaces may be the same or not the same.

## Claims

1. A rolling mode washing method using pulsators wherein during washing or rinsing, water is supplied to a specified position, the method comprising starting a motor (15) to drive the pulsators to rotate for washing;
**characterised in that**
the washing method has at least two laundry rolling surfaces alternating and not simultaneously performed to provide a mechanical force for washing laundry, each said rolling surface being formed by the rotation of a pulsator, more than one rolling of laundry is performed on one rolling surface, and then switched to be performed on another rolling surface, this cycle being repeated untill the end of the washing, the number of rollings on different rolling surfaces may be the same or not the same; and wherein
one of the laundry rolling surface is formed by a pair of adjacent pulsators (6, 7) slantedly arranged with a side auxiliary force being provided by at least another pulsator to push the dropped laundry toward the clipping position of the pair of pulsators, wherein ribs on the pulsators (6, 7) lift, drop and relift the laundry in a nearly continuous laundry flow mode, the process repeating itself at least once; another laundry rolling surface, alternating and not simultaneously performed, is formed by another pair of adjacent pulsators (6, 8) slantedly arranged, wherein the ribs on the pulsators (6, 8) lift, drop and relift the laundry in a nearly continuous laundry flow mode, the process also repeating itself at least for once with a side auxiliary force being provided by at least another pulsator to push the dropped laundry toward the clipping position of the pair of pulsators.

2. A rolling mode washing method using pulsators according to Claim 1, wherein an imaginary plane (21) is formed by each of the said rolling surface in rolling direction, the two imaginary planes formed by the two rolling surfaces have an inclination angle of 20-160°, preferably 80-140°, and more preferably 120°.

3. A rolling mode washing method using pulsators according to Claim 1, wherein each process repeats itself for at least 3-50 times, preferably 5-30 times.

4. A rolling mode washing method using pulsators according to Claim 1, wherein a first pair of pulsators (6, 7) and another pair of pulsators (6, 8) have a pulsator in common (6).

5. A rolling mode washing method using pulsators according to Claim 1, wherein the ribs on one pair of adjacent pulsators lift and furl laundry, which is then cast, dispersed and dropped due to the gravitational and inertial forces.

6. A washing machine for realizing the washing method according to one of Claims 1 to 5, wherein the washing machine includes a control panel (10), a house (13), a damping suspender (14) for an outer tub (12) suspended within the house (13), an inner tub (11) rotatably arranged in the outer tub (12), wherein the inner tub (11) and the pulsators are driven through a motor (15) and a reduction gear train (1), wherein the pulsators have a rotation speed of 10-90 rpm, preferably 30-70 rpm, more preferably 45-60 rpm; the number of the ribs arranged on the pulsators from the center to the edge is 1-8, preferably 2-6; the inclination angle θ formed by the cross-section of each of the pulsators and the horizontal plane is 10-80°, preferably 40-65°, more preferably 55-60°; and the number of pulsators is 3-6, preferably 3-4, more preferably 3.

7. A washing machine according to Claim 6, wherein the pulsators are rotatably arranged between the center and the side wall of the inner tub (11), and are slantedly located therebetween in such a manner that a part of the pulsators near the side wall of the inner tub (11) is arranged higher and another part of the pulsators near the center of the inner tub (11) is arranged lower, the axis of the center driving shaft of the pulsators is intersected with the center axis of the inner tub (11), the acute angle of the two axes is 0-90°, preferably 10-60°, and more preferably 15-45°.

8. A washing machine according to Claim 6, wherein each of the said pulsator includes a base surface and the ribs arranged thereon, the maximum thickness of each of the said rib is equal to 10-90% of the maximum thickness of the whole pulsator, preferably 25-45%; and the base surface is a planar plate type or arc type and coincides with the shape of the contacting part of the inner tub (11).

## Patentansprüche

1. Rollmodus-Waschverfahren unter Verwendung von Pulsatoren, wobei beim Waschen oder Spülen Wasser an einer bestimmten Position bereitgestellt wird, wobei das Verfahren das Anlassen eines Motors (15) zum Antreiben der Pulsatoren, um sich zum Waschen zu drehen, umfasst;
**dadurch gekennzeichnet, dass**
das Waschverfahren wenigstens zwei Wäscherolloberflächen aufweist, die sich abwechseln und nicht gleichzeitig zur Leistung gebracht werden, um eine mechanische Kraft zum Waschen von Wäsche bereitzustellen, wobei jede Rolloberfläche durch das Drehen eines Pulsators ausgebildet wird, wobei mehr als ein Rollen von Wäsche auf einer Rolloberfläche durchgeführt wird und dann umgeschaltet wird, um auf einer anderen Rolloberfläche durchgeführt zu werden, wobei dieser Zyklus bis zum Ende des Waschens wiederholt wird, wobei die Anzahl der Rollbewegungen auf verschiedenen Rolloberflächen gleich oder verschieden sein kann; und wobei
eine der Wäscherolloberflächen durch ein Paar einander benachbarter Pulsatoren (6, 7) ausgebildet ist, die schräg angeordnet sind, wobei eine Seitenhilfskraft durch wenigstens einen weiteren Pulsator bereitgestellt ist, um die fallengelassene Wäsche zur Klemmposition des Paars aus Pulsatoren hin zu drängen,
wobei die Rippen auf den Pulsatoren (6, 7) die Wäsche in einem nahezu kontinuierlichen Wäschefließmodus anheben, fallenlassen und erneut anheben, wobei sich der Vorgang wenigstens einmal wiederholt; eine weitere Wäscherolloberfläche, die sich abwechselt und nicht gleichzeitig zur Leistung gebracht wird, durch ein anderes Paar aus einander benachbarten Pulsatoren (6, 8), die schräg angeordnet sind, ausgebildet ist, wobei die Rippen auf den Pulsatoren (6, 8) die Wäsche in einem nahezu kontinuierlichen Wäschefließmodus anheben, fallenlassen und erneut anheben, wobei sich der Vorgang ebenfalls wenigstens einmal wiederholt, wobei eine Seitenhilfskraft durch wenigstens einen weiteren Pulsator bereitgestellt wird, um die fallengelassene Wäsche zur Klemmposition des Paars aus Pulsatoren zu drängen.

2. Rollmodus-Waschverfahren unter Verwendung von Pulsatoren nach Anspruch 1,
wobei eine gedachte Ebene (21) durch jede Rolloberfläche in Rollrichtung ausgebildet wird,
wobei die zwei gedachten, durch die zwei Rolloberflächen ausgebildeten Ebenen einen Neigungswinkel von 20-160°, vorzugsweise 80-140° und stärker bevorzugt 120° aufweisen.

3. Rollmodus-Waschverfahren unter Verwendung von Pulsatoren nach Anspruch 1,
wobei jeder Vorgang sich wenigstens 3-50 Mal, vorzugsweise 5-30 Mal wiederholt.

4. Rollmodus-Waschverfahren unter Verwendung von Pulsatoren nach Anspruch 1,
wobei ein erstes Paar von Pulsatoren (6, 7) und ein weiteres Paar von Pulsatoren (6, 8) einen Pulsator gemeinsam (6) haben.

5. Rollmodus-Waschverfahren unter Verwendung von Pulsatoren nach Anspruch 1,
wobei die Rippen auf einem Paar aus einander benachbarten Pulsatoren Wäsche anheben und einrollen, die dann aufgrund der Gravitations- und Trägheitskräfte geschleudert, verteilt und fallengelassen wird.

6. Waschmaschine zum Durchführen des Waschverfahrens nach einem der Ansprüche 1 bis 5, wobei die Waschmaschine Folgendes enthält: ein Bedienfeld (10), ein Gehäuse (13), einen Anfeuchtungsaufhänger (14) für eine in dem Gehäuse (13) aufgehängte Außenwanne (12), eine in der Außenwanne (12) drehbar angeordnete Innenwanne (11), wobei die Innenwanne (11) und die Pulsatoren durch einen Motor (15) und einen Umsetzungsgetriebezug (1) angetrieben werden, wobei die Pulsatoren eine Drehzahl von 10-90 U/min, vorzugsweise 30-70 U/min, stärker bevorzugt 45-60 U/min aufweisen; die Anzahl der von der Mitte zum Rand auf den Pulsatoren angeordneten Rippen 1-8, vorzugsweise 2-6 beträgt; der durch den Querschnitt jedes der Pulsatoren und die horizontale Ebene ausgebildete Neigungswinkel θ 10-80°, vorzugsweise 40-65°, stärker bevorzugt 55-60° beträgt; und die Anzahl der Pulsatoren 3-6, vorzugsweise 3-4, stärker bevorzugt 3 beträgt.

7. Waschmaschine nach Anspruch 6, wobei die Pulsatoren drehbar zwischen der Mitte und der Seitenwand der Innenwanne (11) angeordnet sind und sich derart schräg dazwischen befinden, dass ein Teil der Pulsatoren in der Nähe der Seitenwand der Innenwanne (11) höher angeordnet ist und ein anderer Teil der Pulsatoren in der Nähe der Mitte der Innenwanne (11) niedriger angeordnet ist, wobei die Achse der Mittelantriebswelle der Pulsatoren sich mit der Mittelachse der Innenwanne (11) kreuzt, wobei der spitze Winkel der zwei Achsen 0-90°, vorzugsweise 10-60° und stärker bevorzugt 15-45° beträgt.

8. Waschmaschine nach Anspruch 6, wobei jeder Pulsator eine Basisoberfläche und die darauf angeordneten Rippen enthält, wobei die maximale Dicke jeder Rippe 10-90 %, vorzugsweise 25-45 %, der maximalen Dicke des gesamten Pulsators entspricht; und die Basisoberfläche von einer Art einer ebenflächigen Platte oder einer Art eines Bogens ist und mit der Form des berührenden Teils der Innenwanne (11) übereinstimmt.

## Revendications

1. Procédé de lavage en mode roulement à l'aide de pulsateurs, dans lequel pendant le lavage ou le rinçage, de l'eau est fournie à une position spécifiée, le procédé comprenant le démarrage d'un moteur (15) pour entraîner les pulsateurs en rotation pour le lavage ;
**caractérisé en ce que**
le procédé de lavage comporte au moins deux surfaces de roulement de linge en alternance et non réalisées simultanément pour fournir une force mécanique afin de laver le linge, chaque dite surface de roulement étant formée par la rotation d'un pulsateur, plus d'un roulement de linge est réalisé sur une surface de roulement, puis commuté pour être réalisé sur une autre surface de roulement, ce cycle étant répété jusqu'à la fin du lavage, le nombre de roulements sur des surfaces de roulement différentes pouvant être le même ou non ; et dans lequel
l'une des surfaces de roulement de linge est formée par une paire de pulsateurs (6, 7) adjacents agencés en biais avec une force auxiliaire latérale fournie par au moins un autre pulsateur pour pousser le linge déposé vers la position d'attache de la paire de pulsateurs,
dans lequel des nervures sur les pulsateurs (6, 7) soulèvent, déposent et soulèvent à nouveau le linge dans un mode de flux de linge quasi continu, le processus se répétant au moins une fois ; une autre surface de roulement de linge, en alternance et non réalisée simultanément, est formée par une autre paire de pulsateurs (6, 8) adjacents agencés en biais, dans lequel les nervures sur les pulsateurs (6, 8) soulèvent, déposent et soulèvent à nouveau le linge dans un mode de flux de linge quasi continu, le processus se répétant également au moins une fois avec une force auxiliaire latérale fournie par au moins un autre pulsateur pour pousser le linge déposé vers la position d'attache de la paire de pulsateurs.

2. Procédé de lavage en mode roulement à l'aide de pulsateurs selon la revendication 1, dans lequel un plan imaginaire (21) est formé par chacune dite surface de roulement dans une direction de roulement, les deux plans imaginaires formés par les deux surfaces de roulement ont un angle d'inclinaison de 20 à 160°, de préférence de 80 à 140°, et de manière davantage préférée de 120°.

3. Procédé de lavage en mode roulement à l'aide de pulsateurs selon la revendication 1, dans lequel chaque processus se répète au moins 3 à 50 fois, de préférence 5 à 30 fois.

4. Procédé de lavage en mode roulement à l'aide de pulsateurs selon la revendication 1, dans lequel une première paire de pulsateurs (6, 7) et une autre paire de pulsateurs (6, 8) ont un pulsateur en commun (6).

5. Procédé de lavage en mode roulement à l'aide de pulsateurs selon la revendication 1, dans lequel les nervures sur une paire de pulsateurs adjacents soulèvent et enroulent le linge, qui est alors jeté, dispersé et déposé en raison des forces de gravité et d'inertie.

6. Machine à laver pour réaliser le procédé de lavage selon l'une des revendications 1 à 5, dans laquelle la machine à laver comporte un panneau de commande (10), un logement (13), un dispositif de suspension d'amortissement (14) pour une cuve extérieure (12) suspendue au sein du logement (13), une cuve intérieure (11) agencée avec capacité de rotation dans la cuve extérieure (12), dans laquelle la cuve intérieure (11) et les pulsateurs sont entraînés par l'intermédiaire d'un moteur (15) et d'un train d'engrenages réducteur (1), dans laquelle les pulsateurs ont une vitesse de rotation de 10 à 90 tr/min, de préférence de 30 à 70 tr/min, de manière davantage préférée de 45 à 60 tours par minute ; le nombre des nervures agencées sur les pulsateurs du centre jusqu'au bord est de 1 à 8, de préférence de 2 à 6 ; l'angle d'inclinaison θ formé par la section transversale de chacun des pulsateurs et le plan horizontal est de 10 à 80°, de préférence de 40 à 65°, de manière davantage préférée de 55 à 60° ; et le nombre de pulsateurs est de 3 à 6, de préférence de 3 à 4, de manière davantage préférée de 3.

7. Machine à laver selon la revendication 6, dans laquelle les pulsateurs sont agencés avec capacité de rotation entre le centre et la paroi latérale de la cuve intérieure (11), et sont situés en biais entre eux de manière à ce qu'une partie des pulsateurs près de la paroi latérale de la cuve intérieure (11) soit agencée plus haut, et qu'une autre partie des pulsateurs près du centre de la cuve intérieure (11) soit agencée plus bas, l'axe de l'arbre d'entraînement central des pulsateurs est coupé par l'axe central de la cuve intérieure (11), l'angle aigu des deux axes est de 0 à 90°, de préférence de 10 à 60°, et de manière davantage préférée de 15 à 45°.

8. Machine à laver selon la revendication 6, dans laquelle chaque dit pulsateur comporte une surface de base et les nervures agencées sur celle-ci, l'épaisseur maximale de chaque dite nervure est égale à 10 à 90 % de l'épaisseur maximale du pulsateur entier, de préférence de 25 à 45 % ; et la surface de base est un type de plaque plane ou un type d'arc et coïncide avec la forme de la partie en contact de la cuve intérieure (11).
